(19) Europäisches Patentamt
European Patent Office
Office européen des brevets

(11) **EP 3 035 084 A1**

(12) **EUROPEAN PATENT APPLICATION**

(43) Date of publication:
**22.06.2016 Bulletin 2016/25**

(51) Int Cl.:
***G01V 3/165*** *(2006.01)*

(21) Application number: **14198426.0**

(22) Date of filing: **17.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Cable Detection Limited
Cresswell, Staffordshire ST11 9RD (GB)**

(72) Inventors:
• **Branson, Simon
Whiston, Staffordshire ST10 2HZ (GB)**
• **Stanford, Kevin
Stoke-on-Trent, ST2 7JD (GB)**

(74) Representative: **Gyaja, Christoph Benjamin
Kaminski Harmann
Patentanwälte AG
Landstrasse 124
9490 Vaduz (LI)**

(54) **Active buried service detection sonde transmitter**

(57) The invention relates to a locator sonde transmitter (1) for transmitting an electromagnetic field to be located by an electromagnetic locator device (11). Its sonde housing comprises a battery (31), electronics (30) to be powered by the battery (31) for generating an electrical signal with defined characteristics, a switching means for turning the electronics on or off and an antenna (33) to which the electrical signal is applied for emanating an magnetic field. According to the invention, it comprises an attachment interface built in such a way that the sonde transmitter (1) is mountable at a guidance equipment (20) like a push rod and/or an inspection camera, for inserting the sonde transmitter (1) into a conduit or piping. The attachment interface therein forms a passage for the guidance equipment (20), built for the guidance equipment (20) to extend on two sides of the sonde housing.

Fig. 4

## Description

The present invention relates generally to a locator sonde transmitter to be used with an electromagnetic locator device according to claim 1 and to a method of attaching such an electromagnetic sonde transmitter to a guidance equipment according to claim 14.

In the art of underground service detection based on electromagnetic fields, it is known to use electromagnetic sonde transmitters. For example, in a hollow non-metallic service which does not carry electrical currents that emanate a magnetic field to be detected by a locator device, like a buried pipe for water, an active sonde transmitter can be inserted, which emits a magnetic field to be detected by the locator device. Another example of a sonde transmitter usage is to locate blockages or leakages in buried pipework, so the location where the pipework has to be laid open for service can be determined. In another example, underground ducts or cavities at unknown or uncertain locations have to be located in order to avoid damages during earth moving.

An example of a sonde transmitter to be used in hollow structures like gas-, water- or other services, is e.g. mentioned in US 5,194,812. Such a sonde transmitter actively emanates an electromagnetic signal. The used electromagnetic signals are often restricted in frequency by country-specific radio-communication-rules. As example Very Low Frequency radio waves (e.g. in the range of about 15 kHz to 60 kHz, like 8 kHz or 33 kHz, but also e.g. 512 Hz) are often used for such a purpose.

Devices for such a location are known as Cable Detection Tools, Locator Tools or Cable Avoidance Tools - also called CAT. Beside a location in a ground plan - as the path which the buried service is following - it can also be of interest to determine the depth at which the service is buried, or in other words to determine the distance from the detection device to the service. An embodiment of such a detection or locator device is for example described in EP 2 362 241. Such a detection device is mostly embodied movable, which means it can be designed and built as a handheld device to be carried around by a worker. In a special movable embodiment of the detection device, it can for example also be mounted at a bucket of an excavator and move with the bucket. In view of this, the detection device is preferably embodied lightweight and small-sized.

Such locator devices are often not only built to detect electromagnetic fields sent out by the a sonde transmitter, like used in underground pipework, ducts, tubes or other underground hollow structures which have to be explored, but also to detect electromagnetic fields sent out by an underground service itself due to naturally occurring or artificially introduced electrical currents at the service, like in the case of an electrical services or a metallic services to which an electrical current is applied. The detection is done by moving the detection device across a suspected area, e.g. by walking and/or swinging the device side to side. The location where the strongest - or depending on the used detector configuration and strategy weakest - signal is substantially straight down, can be marked. The depth can be determined according a difference of the detected signals at two detectors which are spaced apart in a known distance. Upper-class devices comprise at least two arrangements of multiple coils. For example, US 8,248,056 or US 2005/156600 are showing detection devices with spaced-apart 3D magnetic sensor arrays, e.g. comprising arrays of three mutually orthogonal antennas.

The sonde transmitters of prior art are inflexible, single purpose devices of limited use specifically designed for a very special purpose. There is for example also a limited offer of special, dedicated camera inspection systems which incorporate an electromagnetic field transmitter, but those are rare and pricy. A dilettante attachment of a prior art sonde transmitter with duct-tape or tyraps is not satisfactory for everyday use and also risks loss of the sonde. Usability of such sonde transmitters is therefore limited. The usability is also impaired by the common practice of turning the sonde transmitter on and off by inserting and removing a battery, e.g. in view of impermeability of the sonde housing or in view of the handling of full, empty and half full batteries. It is also often forgotten to turn off the sonde transmitter when the detection is finished, resulting in empty batteries when needed and more replacement cycles. In addition, the sonde transmitters usability is vitiated by the known single side thread coupling interface. Those are available with a variety of different screw joints, which screw has to correspond to the pushing rod it is attached to, wherefore a range of specific screw adapters needs to be provided.

It is therefore an object to improve such a sonde transmitter, in particular to improve the usability and the variety of its usability.

A particular object is to improve the robustness of the sonde transmitter, in particular in view of mechanical stability and/or sealing the sonde transmitter's internals for the often moist and/or aggressive usage environment.

It's an object to provide a sonde transmitter that is more flexible in its usage and handling, in particular a single sonde transmitter built to be usable for multiple purposes. It's also a special object to provide a sonde transmitter where the handling is improved in view of its battery management.

Those objects are achieved by realising the features of the independent claims. Features which further develop the invention in an alternative or advantageous manner are described in the dependent patent claims.

The present invention relates to a locator sonde transmitter for transmitting an electromagnetic field to be located by an electromagnetic locator device. The locator device can therein detect alternating electromagnetic fields, in particular its magnetic field component. By the detected field, a spatial location of the sonde transmitter can be evaluated. The locator sonde has a sonde housing. The sonde housing can in particular be built sealed off from the environment, as such a sonde transmitter is often used in dirty and/or wet environments. The sonde housing contains a battery. This battery can in particular be an exchangeable battery which can be replaced or a rechargeable battery, which is preferably rechargeable without being removed from the sonde housing.

In the sonde housing, there are also electronics for generating an electrical signal with defined characteristics. Such defined characteristics can in particular comprise at least one of modulation, frequency and/or strength of the voltage and/or current of the electrical signal. The electronics are to be powered by the battery. The sonde also comprises a switching means for turning the electronics on or off, preferably by providing a switchable electrical contact from the battery to the electronics. The electrical signal from the electronics is applied to an antenna for emanating a magnetic field. This antenna can in particular be a magnetic coil antenna or aerial, for emanating a magnetic field according to the defined characteristics of the electrical signal.

According to the present invention, the sonde transmitter has an attachment interface built in such a way that the sonde transmitter is mountable at a guidance equipment for inserting the sonde transmitter into a hollow structure, in particular into a conduit or piping, but for example also to an underground cavity or the like. The guidance equipment can in particular be a push rod and/or an inspection camera, but also a cleaning hose, an ultrasonic transducer, a tube scrapper, a pipe rover or the like.

The attachment interface is built in such a way that the sonde transmitter is mountable with the guidance equipment extending on two sides of the sonde housing. In other words, the attachment interface forms a passage for the guidance equipment built for the guidance equipment to extend on two ends of the sonde housing. Those two sides are preferably substantially opposite, so that guidance equipment passes through along the sonde housing.

The attachment interface can be at least partially embodied by the housing. The attachment interface can be embodied to at least partially encompass the guidance equipment. This in particular means that the attached attachment interface can encompass the guidance equipment by more than 180°.

The attachment interface can be embodied as a releasable clamping mechanism built to clamp the guidance equipment so that the sonde transmitter is temporarily fixed with respect to the guidance equipment. In a particular embodiment the attachment interface can for example provide an at least partially frictional linkage by a clamping force.

The attachment interface can be embodied as an easy and quick to operate mechanical release mechanism. The clamping mechanism can therein be a toolless quick lock retainer, in particular built to be manually operated by a human operator, preferably releasable and fastenable by hand. The attachment interface can be built to be adaptable to different sizes of the guidance equipment which it is clamped to. Alternatively, adapters can be provided for the clamping mechanism to make the sonde transmitter attachable to differently shaped and/or sized guidance equipment. The sonde housing and its attachment interface can be built to be substantially concentric to the guidance equipment.

The sonde housing can be embodied by at least two parts to be fixed to each other, with the attachment interface being built to clamp the guidance equipment inbetween the two parts. For example, the clamping can be done by forcing the two parts of the sonde housing together, in particular by means of one or more screws, leverages, wedge bolts, hooks, tooth systems, permanent magnets, pipe brackets and/or by a split tubular clip or clamp sleeve. The forcing together can be spring loaded for defining the clamping force. In a special embodiment, a surface of the sonde housing for the clamping can be built with an uneven texture to at least partially achieve a form lock and/or having an outside of a nonskid material, like e.g. an elastic material such as rubber, etc. The forcing together can for example be done by a switchable magnet, e.g. as known from DD 97706, DE 322 0 801, DE 10 2004 015 873, EP 0 114 259, DE 964194 or the like, wherein a first of the two parts of the sonde housing comprises the switchable magnet and the second of the two parts of the sonde housing comprises a magnetic conduction, so that the two parts are magnetically forced together when the magnetic switch is turned on.

The antenna can be shaped and aligned in such a way that the emitted magnetic field has a defined emission pattern, which is substantial unidirectional around the guidance equipment. It can preferably be directional with its intensity peak substantially orthogonal to the direction of the guidance equipment. The antenna can be built and arranged in such a way that at least part of the emitted field magnetically couples to the guidance equipment, so that an attached guidance equipment carries a magnetic field and can be detected by the locator device.

The switching means for turning on or off the electronics can be operated by inserting/removing the battery. Alternatively, in an embodiment, the switching means for turning on or off the electronics can comprises a magnetically actuated switch, which for example can be embodied as a reed switch or by a magnetically sensitive electronic chip encapsulated in the housing.

The switching means for turning on or off the electronics can be operated by the attachment interface, in such a way that it turns on the electronics when the sonde transmitter is attached and turns off the electronics when the sonde transmitter is detached from guidance equipment by the attachment interface. This can be achieved by a mechanically actuated switch or by the abovementioned magnetically actuated switch.

The switching means can be built to switch the sonde transmitter into at least two different emitting modes, for example a selection of different frequencies of the emitted magnetic field. A selection of those different modes can for example be dependent on the actuation of the clamping mechanism, dependent on a mounting alignment of the clamping mechanism, dependent on a mounting alignment of parts of the sonde housing with respect to each other or dependent on a choice of a selected part of the sonde housing that is mounted.

The sonde transmitter can for example comprise a tilt sensor or accelerometer. In an embodiment, the actual tilt value determined by this accelerometer can influence the emitted magnetic field. For example, based on the tilt value, an excitation of the aerial can be modified by adopting the characteristics of the electrical signal, like a tilt dependent modulation or coding of the electrical signal applied to the antenna. In another example, dependent on the tilt value, multiple antennas can each be excited by a specific electrical signal in such a way that the overall resulting maximum of the emitted magnetic field is substantially plumb upward, regardless of the sonde transmitters orientation. In particular, the sonde transmitter can comprise two orthogonal antennas, wherein one is designed for an upward emission when the sonde transmitter is substantially horizontal, while the other is designed for an upward emission when the sonde transmitter is substantially vertical. Optionally the driving of those two antennas can be done with different characteristics of the electrical signal, in a way that they are distinguishable by a locator device, so that the orientation of the sonde transmitter can be concluded by the locator device or its operator. In yet another example which can be used in combination or independently, the values determined by the accelerometer can be used for a mode selection of the emanated magnetic field, by making characteristics of the electrical signal dependent on the orientation during or a defined time after a mounting of the sonde transmitter to the guidance equipment.

The attachment interface can be embodied to encompass the guidance equipment, wherein the switching means is operated by attaching/detaching the sonde transmitter to the guidance equipment. In the same manner a prior art screw type attachment interface at one end of the sonde - in form of a tapped hole or a thread bolt - can comprise the switching means, which is operated by screwing/unscrewing, e.g. by mechanically or magnetically actuating a switch.

The invention also relates to a method of attaching an electromagnetic sonde transmitter for a detection by a mobile locator device to a guidance equipment, in particular an inspection camera or pushing rod, to be inserted to an occluded underground service at a construction site. A clamping of the housing of the sonde to the guidance equipment is established by the sondes attachment interface, which is built in such a way that the guidance equipment can pass the housing of the sonde and can extend on two ends of the housing. In particular, the housing at least partially encircles the guidance equipment, preferably by more than 180°, substantially or fully. In the method, the clamping can automatically actuate a switching element for turning the emanating of an electromagnetic field of the sonde transmitter on or off. In particular, the actuating of the switching element can be done by means of a magnetic field.

The sonde transmitter can comprise a microcontroller, microcomputer, DSP or a programmable or hardwired digital logic, wherefore the present invention can involve a computer program product that is stored on a machine readable medium or embodied as electromagnetic wave (such as e.g. a wired or wireless data signal) which implements certain functionality of the sonde transmitter according to the invention in software, which therefore is also an embodiment of the invention.

Devices, methods and setups according to the invention are described or explained in more detail below, purely by way of example, with reference to working examples shown schematically in the drawing. Specifically,

Fig. 1 shows an example of an embodiment of a mobile locator device in use with a locator sonde transmitter according to the present invention;

Fig. 2 shows an example of a general embodiment of a locator sonde transmitter according to the invention;

Fig. 3 shows an example of a first embodiment of a locator sonde transmitter according to the invention in an axonometric view;

Fig. 4 shows an example of the first embodiment of a locator sonde transmitter according to the invention in a front and side view;

Fig. 5 shows an example of a locator sonde transmitter according to the invention with an example of a guidance equipment in form of a camera inspection system;

Fig. 6 shows an example of a second embodiment of a locator sonde transmitter according to the invention;

Fig. 7 shows an example of a third embodiment of a locator sonde transmitter according to the invention;

Fig. 8 shows an example of a fourth embodiment of a locator sonde transmitter according to the invention;

Fig. 9a shows an example of a fifth embodiment of a locator sonde transmitter according to the invention;

Fig. 9b shows an example of a sixth embodiment of a locator sonde transmitter according to the invention;

Fig. 10 shows an example of a seventh embodiment of a locator sonde transmitter according to the invention;

Fig. 11 shows an example of an eighth embodiment of a locator sonde transmitter according to the invention;

Fig. 12 shows an example of a ninth embodiment of a locator sonde transmitter according to the invention;

Fig. 13 shows an example of a tenth embodiment of a locator sonde transmitter according to the invention;

Fig. 14 shows an example of an eleventh embodiment of a locator sonde transmitter according to the invention;

Fig. 15 shows an example of a twelfth embodiment of a locator sonde transmitter according to the invention;

Fig. 16 shows an example of a thirteenth embodiment of a locator sonde transmitter according to the invention;

Fig. 17 shows an example of an embodiment of a first antenna arrangement in a locator sonde transmitter according to the invention;

Fig. 18 shows an example of an embodiment of a second antenna arrangement in a locator sonde transmitter according to the invention.

The diagrams of the figures should not be considered as being drawn to scale. Where appropriate, the same reference signs are used for the same features or for features with similar functionalities. Different indices to reference signs are used to differentiate between different embodiments of a feature which are exemplary shown.

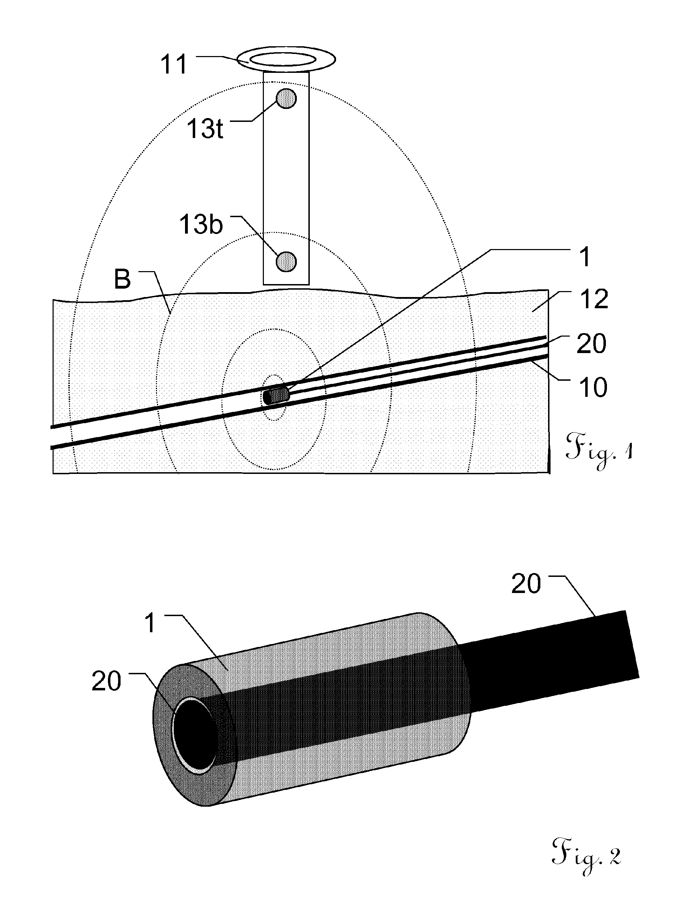

**Fig. 1** shows an embodiment of an example of a mobile detection device 11 for an evaluation of a location information of a locator sonde transmitter 1 according to the present invention which is inserted in an underground structure 10 that is buried in ground 12 by means of a guidance equipment 20. The guidance equipment 20 can for example be a simple mechanical pushing rod but can also comprise additional capabilities like imaging in case of an inspection camera, tube scraping functionalities or the like. In another example, the guidance equipment 20 can also be a cable or the like, to be inserted into a conduit or a cable pulling system like a duct rodder or a fish tape. The sonde transmitter 1 comprises an antenna which is applied with an alternating electrical current by electronics. The antenna thereby emanates an electro-magnetic field which is in particular dominated by the magnetic field part, as shown by two field lines B. The here shown locator device 11 comprises at least two detection coil sets 13t,13b, as the shown top set of detection coils 13t and the bottom set of detection coils 13b, which are arranged in a spacing with respect to each other. The magnetic field B, which is in its characteristics defined by the electrical signal applied to the antenna in the sonde transmitter 1, is emanated from the sonde transmitter 1 and picked up by the locator or detection device 11 so that the origin of the source of the magnetic field B - which source is the sonde transmitter 1 - can be located by the operator of the detection device 11.

The detection of the structure or service 10, which can e.g. be a hollow structure like a pipe, tube, conduit, duct, pipeline, etc. - which is often but not necessarily located underground - is not required to per se carry an electrical current and emanate a detectable magnetic field. The sonde transmitter 1 inserted in the hollow structure 10 is used to emanate a magnetic field B which is detectable by the coils 13t,13b in the locator device 11. In contrast to the field from a current carrying buried service, which can be considered as a long current carrying structure, the magnetic field from a sonde transmitter 1 according to the present invention is generally used as a virtually single point emitter of a magnetic field B. The sonde transmitter 1 can be located according to the magnetic field strength picked up by the coils of the locator device 11. Since the magnetic field B in a distance d is

$$B \propto \frac{1}{(d)^3},$$

a distance from a defined point of the locator device 11 to the sonde 1 can be determined by two coils 13t,13b in a known spacing, in accordance with the theoretical formula

$$\frac{B}{T} = \frac{(d+s)^3}{(d)^3},$$

wherein "d" is the distance value from the bottom coil 13b to the sonde transmitter 1, "T" is the magnetic field strengths at the top coil 13t and "B" at the bottom coil 13b, and "s" is the separation or spacing of coil 13t and coil 13b in line to the sonde transmitter 1. The distance from the sonde can therefore be determined by the ratio of the field at top-coil 13t and bottom-coil 13b and an absolute value of the magnitude of the field is not required. In a three dimensional embodiment oft the locator device, the location information can alternatively be provided in three dimensions, e.g. with an additionally angle or offset information.

The sonde transmitter 1 is built to emanate a magnetic field B with defined characteristics such as a defined strength, frequency, modulation, and/or coding. The locator device 11 can be configured to be especially sensitive for those defined characteristics, for example by a frequency filter, demodulation, matched filtering, coherence, decoding and evaluation of a coding, etc. In an advance embodiment, spread spectrum approaches can be used to identify the sonde signal even within the noise floor.

For example, such sonde transmitters 1 are often used to locate damages and/or obstructions of an underground service 10. For instance, a prior art sonde transmitter is screwed in front of a push-rod as guidance equipment. The sonde transmitter 1 is inserted into the pipe 10 until it gets stuck at an obstruction or damage.

Then the sonde transmitter 1 will be located according to its emanated field B by a detection device 11 from above ground, so that a digging for repair can be done at the correct location. Monitoring progress of underground horizontal boring tools or the like is another example for a use of a locator sonde transmitter 1 according to the present invention.

**Fig. 2** illustrates an embodiment of a sonde transmitter 1 according to the invention attached to guidance equipment 20. Details will be discussed by the examples of embodiments in the following figures, wherein the certain features discussed in one of the figures can also be combined with other features or exchanged by corresponding alternatives described with respect to another of the figures. The shown shapes represent a principle, preferred design option, but might not be considered limiting.

According to the invention, the usability of the sonde transmitter 1 is increased. Its usability is more customizable and its usability more versatile, for example the sonde transmitter 1 according to the invention is not only attachable in front of an especially therefore prepared pushing rod as with the M10 threads used in prior art, but e.g. also anywhere along the way of any random guidance equipment 20. For example, a pushing through of the sonde transmitter 1 in a pipe 10 can be unsuccessful as the sonde transmitter 1 gets stuck. According to the invention, at first, only a pushing rod alone can then be inserted to the pipe as guidance equipment 20, so that the rod is extends the pipe and is accessible at both ends. At second, then the sonde transmitter 1 according to the invention can be clamped anywhere along the rod, so that it can be pulled in both directions, forth and/or back, whereby the likelihood of success is increased.

In another example, the guiding equipment 20 inserted in a tube 10 can not only be a simple pushing rod, but also a cleaning hose, an inspection camera or endoscope, a mechanical cleaning tool, a water-jet, a repair equipment, etc. can be used. This is possible, since the guiding equipment 20 can extend on both sides of the sonde transmitter 1 of the present invention, so that the working end of the guiding equipment 20, like the camera lens, the cleaning nozzle, the drill, the sensor, etc. can pass through the sonde transmitter 1 and be operable at front.

The sonde 1 can e.g. be embodied as a substantially stadium shaped, substantially cylindrical capsule. In view of the sealing of the sonde housing, it is unfavourable to often remove and replace the battery 31 of a sonde transmitter 1, which requires an opening of the battery compartment in the sonde housing. In particular, sonde transmitters 1 which are turned on by inserting the battery 31 and turned off by removing the battery 31 are suffering from frequent exchange cycles. In particular, the below discussed switching means and/or the wireless charging, preferably the combination of both can gain additionally advantages in view of usability, robustness and ease of use of a sonde transmitter 1 according to the invention.

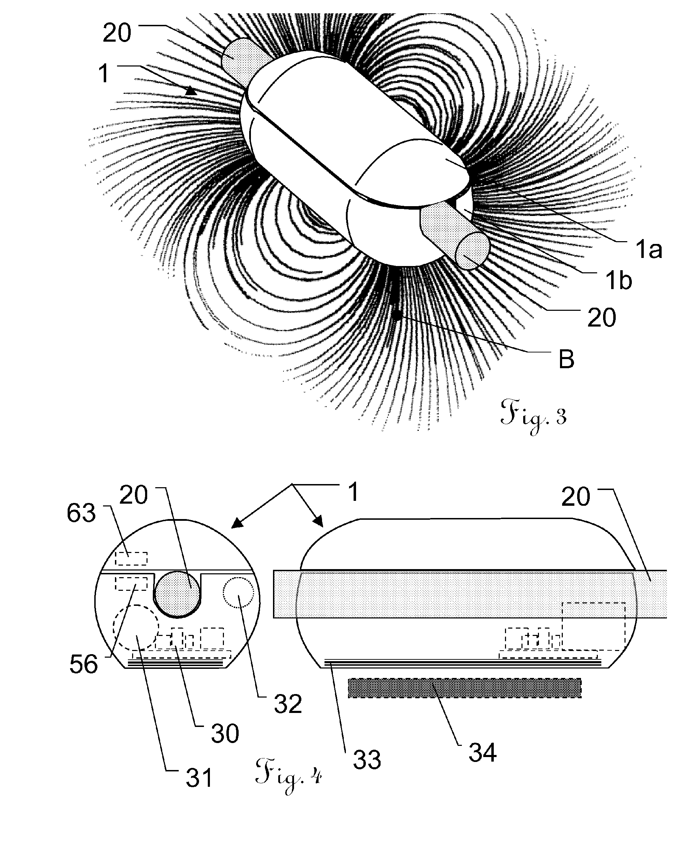

**Fig. 3** shows an example of an embodiment of a location sonde transmitter 1 according to the invention in a three dimensional view. Such a sonde transmitter 1 can be described as a small, usually autonomous, transmitter. In many case it is designed to transmit dominantly magnetic fields at low frequencies, e.g. 33 kHz or 512 Hz, which are commonly used in the field of art of cable locating by a locator device 11. An example of an emitted magnetic field pattern B is shown here, which can be substantially similar to that of a solenoid.

The sonde transmitter 1 is for example fed along underground pipes, drains, or structures by a long guidance equipment 20 in order to locate faults in the underground drain, pipe or structure. In conjunction with a cable locator device 11, the location and/or depth of the sonde transmitter 1, and consequently e.g. a blockage or damage of the pipe, can be detected, so that an excavation can be started at the correct location in order to effect repair of the drain, pipe or underground structure.

The shown sonde transmitter 1 of this embodiment has a sonde housing which comprises a first part of the housing 1a and a second part of the housing 1b. Those two parts 1a and 1b of the sonde transmitter 1 embody an attachment interface according to the invention, which is built to attach the sonde transmitter 1 to a guidance equipment 20, wherein the guidance equipment 20 can extend on two substantially opposite sides of the sonde housing. The attachment interface is built to fixate the sonde transmitter 1 to the guidance equipment 20 in a removable manner, so the sonde transmitter 1 can be attached and detached to the same or different guidance equipment 20. Such an attachment interface for a temporary attachment of the sonde transmitter 1 to a guidance equipment 20 can be comprised as part of the housing or be embodied by the housing itself. In the shown illustration, the guidance equipment 20 is clamped between the two parts of the housing 1a and 1b, with the guidance equipment 20 passing the sonde. For an adaptation to different sizes and/or shapes of the guidance equipment 20, the attachment interface can be variable in size and/or adapters or inlays for different guidance equipment diameter ranges can be provided, e.g. by rubber pads, rubber sleeves or the like.

**Fig. 4** shows an example of an embodiment of a location sonde transmitter 1 according to the invention in a front view and a side view. In dashed lines, some components inside the sonde transmitter 1 are shown. For the functional purpose of emanating a magnetic field with known characteristics, the sonde 1 comprises an electronic circuitry 30 for generating an electrical signal of known characteristics. This electrical signal is then applied to an antenna 33 which emanates an according electromagnetic signal. Due to the - in most cases required - penetration of soil by the emanated field, the preferred field will be dominantly magnetic, wherefore a magnetic coil antenna will be used. The antenna is preferably designed and aligned in such a way to achieve a desired irradiation pattern which allows a substantially unambiguous detection of the location of the source of the emission by a detection tool 11. Optionally, also ferrite-cores can be used in the sonde 1 for concentrating and guiding the magnetic field.

The sonde transmitter 1 is powered by a comprised battery 31, which can be embodied exchangeable and/or rechargeable. In case of a rechargeable battery 31, the sonde transmitter 1 can comprise a contactless charging interface, in particular operating by magnetic induction. Beside a dedicated wireless charging interface, in a special embodiment, the antenna 33 which is used to emanate the magnetic field for detection can also be used to receive magnetic fields from an external wireless charger 34, which antenna 33 will be used to charge the battery 31 of the sonde transmitter 1 by putting it close to the charger 34. For example, a voltage level above a certain threshold, which is above the voltage used for the electrical signal for transmission (and preferably above battery voltage level), is coupled out from the antenna 33 and provided to a charging circuit for the internal battery 31 of the sonde transmitter 1. Thereby, the sonde can be hermetically sealed and it is not required to be opened to exchange batteries and no electrical charging contacts need to be provided at the outside of the housing.

The shown embodiment also comprises an optional indicator 32 visible from the outside, which can e.g. be embodied by a flashing LED, which indicates proper operation, operating mode, battery state, and/or other states of the sonde transmitter 1.

With an embodiment of a design according to the invention, a sonde transmitter 1 can be clamped around any rod, camera inspection cable or the like, making it very versatile and useable. For example, any customer who owns a camera inspection system can retrofit a sonde transmitter according to the invention as it will be discussed below.

Optionally, a switching means 56 is shown, built to turn the field transmission of the sonde transmitter 1 on and off, for example operated by a permanent magnet 63. The permanent magnet 63 can be comprises as a part of the attachment interface so that the switch 56 is operated by the attachment interface or - here not explicitly shown - a permanent magnet 63 can be approached from outside of the sonde transmitter 1 for operating the switch 56 to turn the sonde 1 on or off or to select a mode of operation. Alternatively, the optional switching means 56 can also be mechanically operated by the attachment interface of the sonde transmitter 1 according to the invention. Details will be discussed further below.

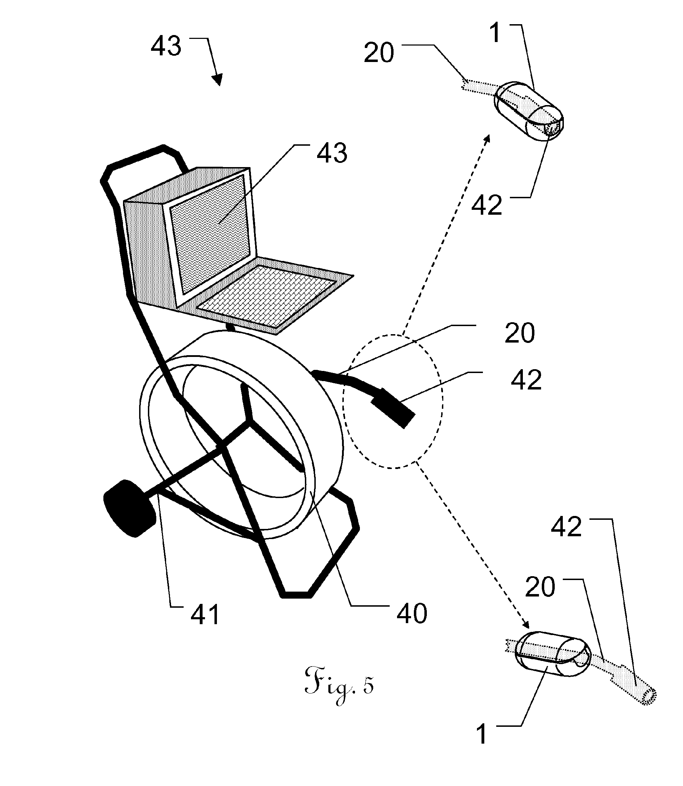

Fig. 5 shows an example of an embodiment of an inspection equipment 45. It comprises a cart 41 with reel 40 of guidance equipment 20, in form of a long flexible, resilient rod comprising an electrical interface to the inspection camera 42 at its end. The other end of the guidance equipment 20 is linked to an evaluation terminal 43, which is built to show an image from the inspection camera 42, to control the inspection equipment, like adjusting image characteristics, illumination etc. and/or to store images or videos of the inspection. In the shown figure, the evaluation terminal 43 is located on the cart 41, but it can also be located remote and/or linked by wireless means.

Such a camera inspection equipment 45 is generally integral or inline with a guidance cable which provides power and communication of camera images and optionally certain control features like illumination, etc. Those guidance cables to operate the inspection camera 42 are specifically designed to operate with the specific manufacturer's equipment for usage and inspection image evaluation. As the camera lens has to have free view to the front, a known sonde, which is to be screwed onto the end of a long rod is not applicable. So an inspection camera 42 has to comprise some inherent signal transmitter to be locatable, which limits the available product range.

The sonde transmitter 1 according to the invention is built to be used with such an inspection system 45. In the upper example, the sonde transmitter 1 according to the invention is attached to inspection camera 42 in a way that the cameras view is not obscured, e.g. with the camera front being substantially planar with the sonde front, but the camera 42 can also be jutting out or in from the sonde transmitter 1. In the lower example, the sonde transmitter 1 is attached to the guidance equipment 20 at a defined position right behind the inspection camera 42. In particular, if the end with the camera 42 has a larger diameter than the guidance equipment 20, the sonde transmitter 1 can be designed smaller in diameter.

Beside bare mechanical pushing rods and above mentioned inspection systems 43, the sonde transmitter according to the invention can also be attached other guidance equipment 20, like other physical sensors such as temperature, humidity, gas sensors, or to pipe cleaning and scraping equipment, water jets, a spectrometer like a near Infra-Red spectroscopy system, etc. Also, a guidance cable of a rover, a rover itself or the like can be fitted with a sonde transmitter 1 according to the invention by its attachment interface. Thereby, for example a single sonde transmitter 1 according to the invention can be electively attached to multiple guidance equipments 20, dependent on the task to be carried out.

Examples of possible uses of such a sonde system according to the invention are given in the following. For operation, the sonde 1 can be attached to the cable 20 behind the camera 42. The long cable 20 will be used to push the turned on sonde 1 along an underground pipe or structure 10, until a problem with the pipe or structure is located on the inspection image from the camera 42, for example during inspection of a blocked drain. The path of the cable 20 can then be traced using the cable locator 11, for example by applying a 33 kHz detection signal from a transmitter to the cable 20, until the end of the cable 20 is found - i.e. the sonde 1 is located. Having located the sonde 1, the sonde 1 and its depth can be exactly found using the cable locator 11 for sonde transmitter detection. For above purpose, in particular a suitable cable locator 11 containing a GPS, Bluetooth or Wi-Fi for wireless connectivity to the camera system 45, can be used. Further, the thereby gathered information can be stored, providing a log or survey of the work, e.g. including a video from the camera 42, GPS data and/or other information. This data can be locally stored and/or transmitted back to a server and stored on a database for example. The database information can then be used for many reasons, e.g. to verify that the repair work had been satisfactorily completed or provide evidence to the customer that the work was required, etc.

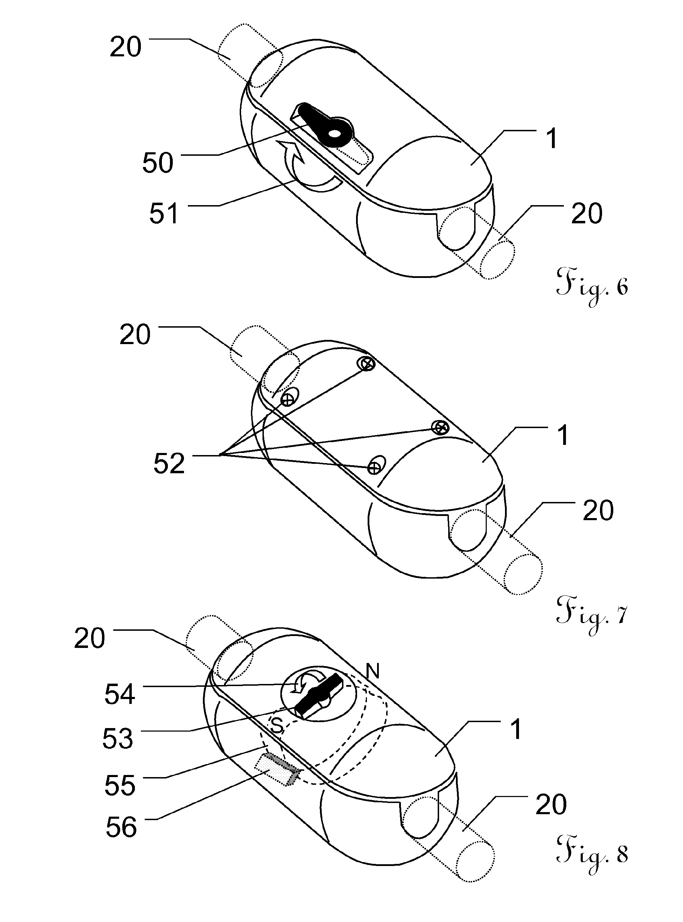

In the embodiment of **Fig. 6,** a sonde transmitter 1 according to the invention is shown, which fully encircles the guidance equipment 20 when attached with its attachment interface. The attachment interface is locked and released by a, in its closed position preferably recessed, lever 51 which in this embodiment can be operated by an operator, preferably by hand without any tools as indicated by the arrow 51. In an advanced embodiment, a selection of a transmission mode of the sonde transmitter 1 can be selected by locking the lever 51 either to the left or to the right. The housing of the sonde transmitter 1 can comprise two parts which either can be taken apart completely or which can be linked by a kind of hinge, in order to open it up for inserting the guidance equipment 20 which is running through the attachment interface of the sonde 1. By operating the lever 51, the guidance equipment is clamped between the two housing parts, preferably by means of some spring element so the attachment interface is adjustable to different diameters or shapes of the guidance equipment 20 and provides a defined clamping force.

In the embodiment of **Fig. 7,** the sonde transmitter 1 according to the invention is similarly designed as before, but the attachment interface is to be operated by screws 52 to be manipulated by the operator for attaching or detaching the sonde transmitter 1. For diameter adoption of the attachment interface, there can be a spring element as described above or there can be provided inlays or sleeves to be clamped in-between. The screws 52 can be regular slotted, Phillips, Torx or socket crews to be operated by a corresponding common handheld tool, or a kind of finger screw. Alternatively, a kind of splint pin with a splint can be used instead of a crew 52.

In a variant, a first point interfacing two sonde housing portions, e.g. the screw at the right back, can provide fixed a hinge joint which is not to be unscrewed. The upper housing portion can then be twisted sidewise with respect to the lower housing portion around this hinge, so that the attachment interface is revealed and the guidance equipment 20 can be inserted. When the top is twisted back, a screw at one or more second points is used for clamping the guidance equipment 20 between the two housing portions.

In the embodiment of **Fig. 8,** the sonde transmitter 1 according to the invention is similarly designed as before, but the attachment interface is operated by a, preferably recessed, hand gear 53 to be turned 54. This hand gear actuates a magnetic lock, functioning as e.g. known from the above cited prior art for such a magnetic locking switch. By turning 54 of the hand gear 53, a magnetic loop 55 of a permanent magnet running through two parts of the sonde housing will be closed, and the resulting magnetic attractional force will hold the parts of the sonde housing together and/or clamp the guiding equipment 20 in the attachment interface.

An optional magnetically actuated electric switching element 56 is here also shown, by which the field emission of the sonde transmitter 1 can be turned on or off. If the sonde transmitter 1 provides different transmission modes, also those modes can be selected by one or more such magnetically actuated electric switching elements 56. The magnetically actuated electric switching element 56 can e.g. be embodied as a reed realise or another mechanical switch built to be operable by a magnetic field, preferably switched by the absence or presence of a constant magnetic field, but it can also comprise an electronic chip which is sensitive to magnetic fields as known in the art.

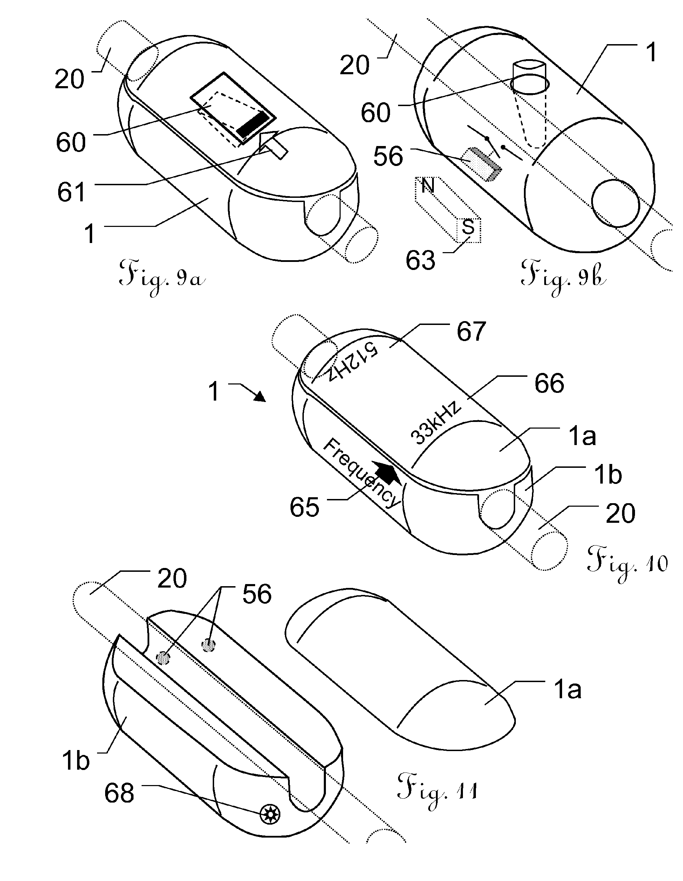

In this example, this magnetically actuated switching element 56 turns the electronics 30 in the sonde transmitter 1 on when the magnetic locking 53 is turned on. For example, an electrical link from the battery 31 to the electronics 30 is established when the locking magnetic field is present. When the magnetic locking 53 is turned off, the emanating of an alternating magnetic field by the sonde 1 is then automatically turned off again. As it will be further discussed, e.g. with reference to Fig. 10, different characteristics of the emanated field or modes of operation can e.g. be selected by different physical attachments of the clamping mechanism, for example by different locking parts of the housing, which are routing the switched magnetic field for locking and switching along different paths, wherein each path comprises a magnetically actuated eclectic switch that selects a dedicated mode.

A magnetically actuated switching element 56 for turning on or off the emanation of a detection field by the sonde 1 like discussed above, can also be used in an embodiment of a sonde transmitter 1 according to the invention with an attachment interface not having a magnetic lock, e.g. as shown in the other figures. For example, the attachment interface of the sonde transmitter 1 can comprise a permanent magnet which's primary use is not to provide a clamping force for a guidance equipment 20, but which is built to actuate the magnetic switching element 56 when the attachment interface is locked. The permanent magnet for switching can e.g. be at the lever 50 of Fig. 6 and the switch 56 underneath the closed position of the lever 50. In another example a magnetic loop, which comprises the switch 56, can be closed when a metallic screw 52 of Fig. 7 is inserted. In a similar way, a switch 56 can be used in other embodiment, in particular in the examples of the herein shown embodiments. By the magnetically actuated electrical switch 56, no externally mechanically accessible switching means is required, whereby a hermetical sealing of the housing of the sonde transmitter 1 can be achieved.

In another embodiment of a sonde transmitter 1 according to the invention, magnetically actuated switching of the electronics and/or mode selection can also be achieved not by the actuation of the attachment interface, but by using an external permanent magnet to manipulate a switching element inside the housing of the sonde transmitter 1 by magnetic forces. For example, a sliding or tipping mechanical switching element 56 can be operated by means of magnetic forces applied by a permanent magnet held and/or moved at the outside of the sonde 1. The state of the switching element 56 can be indicated to the outside by an indicator which can e. g. be a simple observation window showing the state of the switching element 56 or by a light, sound and/or vibration indicator.

**Fig. 9a and Fig. 9b** are showing examples of embodiments of a sonde transmitter 1 according to the invention with an attachment interface that comprises a wedge 60 built to clamp the guidance equipment. The wedge 60 is built to be self release prove when locked in direction 61, for example by the requirement of applying special direction of force on the wedge to release it. In another embodiment, the wedge can be pre-tensioned by a spring, which clamps the sonde transmitter 1 to the guidance equipment 20 and which pre tension has to be overcome by the operator during the attachment/detachment process. As in all embodiments, an optional magnetically operated switching element 56 can be comprised which can be actuated by the attachment interface, as the by the wedge 60, or by an external permanent magnetic item 62 as mentioned above. In the example of Fig. 9b, the housing of the sonde 1 is embodied as a single part and slid over the guidance equipment 20.

In **Fig. 10,** an example of an embodiment of a sonde transmitter 1 according to the invention is shown, which it explicitly shows that the sonde 1 provides two different characteristics of the electrical signal to be applied to the antenna for transmission - in this example in the form of two different transmitted signal frequencies, like the 33 kHz at sign 66 or 512 Hz at sign 67 - illustrated as non-limiting examples in the figure. Those characteristics or modes are selected by the orientation of the top part 1a of the housing of the sonde transmitter 1 with respect to the bottom part 1b of the housing of the sonde transmitter 1 in which the attachment interface is attached to the guiding equipment 20. The indicator 65 points either to the first marking 66 for the first characteristic of the signal or to the second marking 67 for the second characteristic. Optionally, the sonde transmitter 1 can also be automatically turned on and off by when the attachment interface is clamed and released, as discussed before. In another embodiment, different top parts 1a of the housing of the sonde 1 can be provided, by each of which a specific emission characteristic is selected, as each operates different switching elements 56.

In **Fig. 11,** an example of an embodiment of a sonde transmitter 1 according to the invention is shown in an open position, where it can be seen that the guidance equipment 20 extends on two, preferably substantially opposite, sided of the housing of the sonde 1. The shown housing of this embodiment comprises two parts 1a and 1b, wherein only one of those two parts 1b comprises all the functional parts with the battery 31, the electronics 30, the switching means 56 and the antenna 33 for the transmission of the detection signal. Also, an indicator 68 is shown for informing the operator of the correct function of the sonde transmitter 1, the battery state, a presently selected mode, and/or the like. Such an indicator 68 can also be present in any other herein described embodiment. There is also an optional actuator for the switching element 56 shown at two exemplary locations, which is built and arranged to turn the electronics 30 in the sonde transmitter 1 on for transmission, when the attachment interface is attached to a guidance equipment 20 and turns the sonde transmitter 1 off when it is detached. In an embodiment, the switching element 56 can be mechanically actuated by the guidance equipment 20 or by mounting the housing part 1a or by a locking mechanism of the attachment interface. In another variant, the switching element 56 can be magnetically actuated as described above. In general, the sonde transmitter 1 according to the invention is autonomous, preferably built hermetically sealed without openings and electrical contactless, which means without electrical contacts provided to the outside or to the guidance equipment 20.

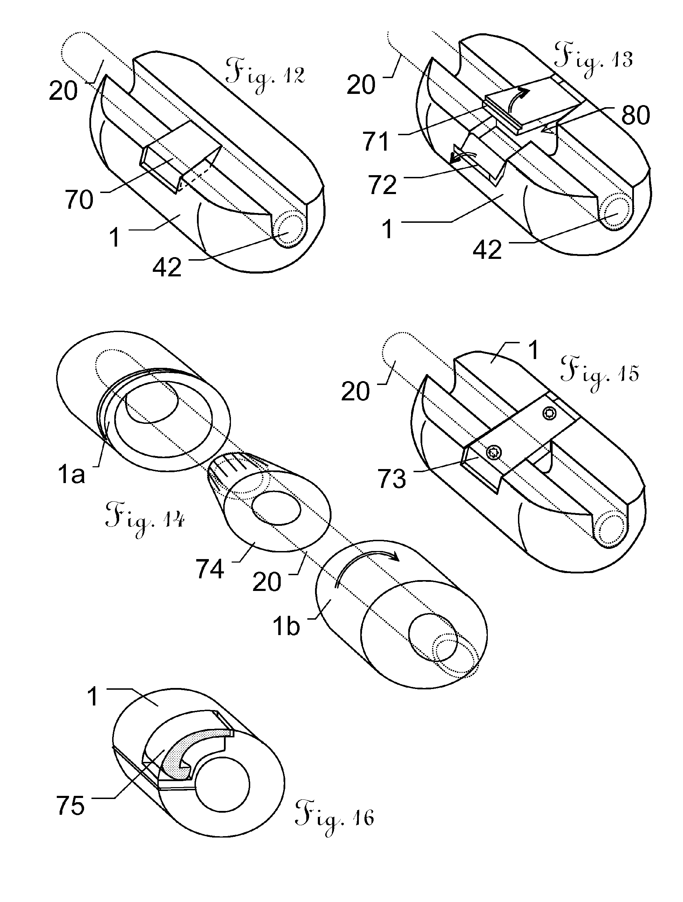

**Fig. 12** shows an example of an embodiment of a sonde transmitter 1 according to the invention attached to an inspection camera 42 or an endoscope. The locking bar 70 is built to clamp the sonde transmitter 1 to the camera 42 to temporarily fix the sonde transmitter 1 to the camera 42 for an inspection when it is required to externally locate the camera 42 according to the magnetic field emanated from the sonde transmitter 1. For other tasks and/or for storage, the sonde 1 is detachable from the camera 42 by releasing the clamping of the locking bar 70. In this example, the sonde 1 is not fully encompassing the guidance equipment 20 (respectively the camera 42) but only partially encompassing. For a clamping of the guidance equipment 20 with the attachment interface, the partial encompassing in a clamped position is preferably at least more than 180° in locked position, so the guidance equipment can physically not slide out of the clamped attachment interface due to its form, wherefore no excessive clamping force is required.

**Fig. 13** shows an example of an embodiment of a sonde transmitter 1 according to the invention with another attachment interface embodied as a yoke 71 to be fixed by an interlock 72 in a clamped position. If required a, preferably flexible, inset 80 can be introduced under the yoke 71.

**Fig. 14** shows an example of an embodiment of a sonde 1 according to the invention, where the attachment interface comprises a kind of chuck or collet chuck 74 in-between two parts 1a and 1b of the housing of the sonde 1, whereof only one of the parts 1a or 1b of the sonde housing encapsulates all the field transmitting components, in particular the battery, antenna electronics switch and antenna. The chucks 74 can be exchangeable to adapt the sonde transmitter 1 to different guiding equipment 20 sizes and shapes. In this illustrative embodiment, part 1a and 1b can, preferably by hand, be twisted to be screwed together with the chuck 74 in-between, which chuck 74 is then clamping the guidance equipment in a releasable manner.

**Fig. 15** shows an example of an embodiment of a sonde transmitter 1 according to the invention similar to Fig. 13, but the yoke 73 of the attachment interface is screwed to the sonde transmitter 1.

**Fig. 16** shows an example of an embodiment of a sonde transmitter 1 according to the invention, wherein the housing of the sonde transmitter 1 is single pieced and slotted, with a, preferably manually operable and in its locked position substantially non-overhanging, bail 75 for clamping which actuates the attachment interface.

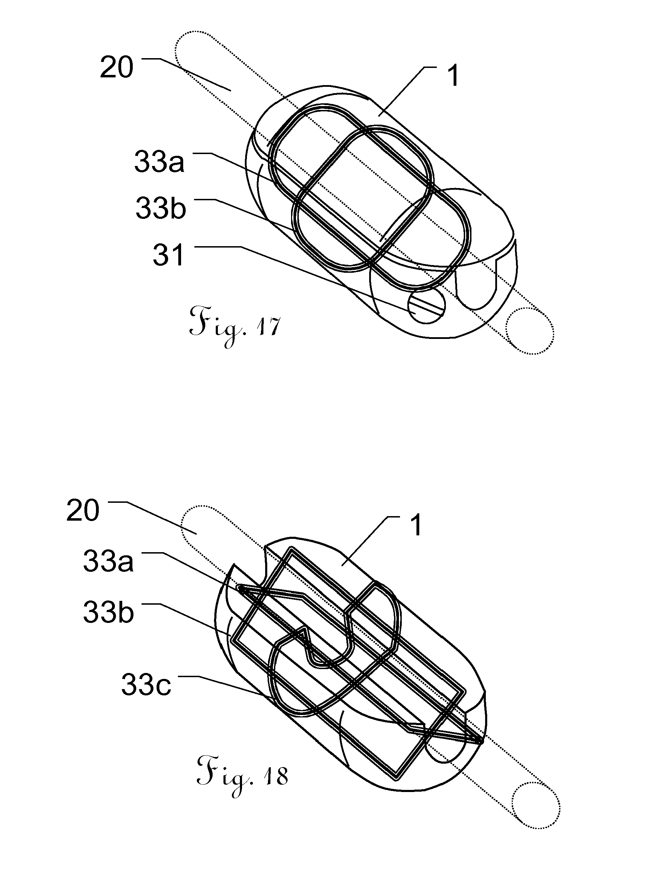

**Fig. 17** shows an example of an embodiment of a sonde transmitter 1 according to the invention. This illustration shows a battery compartment which is accessible from outside, so the battery 31 can be replaced. The battery compartment is sealed up by a gasket from the environment and is preferably sealed from the inner electronics, so that in case moisture enters the battery compartment, it can not progress to the electronics 30. The sonde transmitter is autonomous in operation. It can make use of a standard battery, as e.g. an AA or AAA type, a 9V-Block or the like. The sonde transmitter 1 can be embodied with the features described above, e.g. with an off/on switch operated by a magnet, which magnet can in particular be embodied in the clamping arrangement, so that the sonde transmitter 1 turns on automatically when used in the operating environment - without the requirement of inserting and removing the battery as in some prior art approaches - and/or e.g. with the feature of a flashing light to indicate operation of the sonde transmitter.

Although a single antenna can be sufficient, the here shown sonde 1 comprises multiple antennas 33a and 33b, arranged, designed and driven to emanate the magnetic field with an irradiation pattern wallowing an exact location of the sonde transmitter by a locator device 11. Preferably, the irradiation pattern has its intensity maximum substantially plumb upward. As the orientation of the sonde transmitter 1 inside of the underground service 10 to be explored has to be considered unknown, the irradiation pattern of the sonde transmitter 1 is often chosen to be substantially symmetrical around the circumference of the guidance equipment 20. According to the invention, the sonde 1 can comprise a tilt sensor providing tilt information about the actual orientation of the sonde transmitter. In an embodiment according to the invention this tilt information is used to influence the defined characteristics of the electrical signal applied to the antenna 33a,33b, so that the receiving locator device 11 can evaluate those signals and conclude the orientation of the sonde transmitter 1. In another embodiment, the tilt information is used to selectively supply one or more of the antennas 33a 33b of the sonde transmitter 1 with the electrical signal in such a way, that the irradiation pattern always has its peak substantially plumb upward, regardless of the orientation of the sonde 1. This not only eases detection but also helps to improve energy efficiency of the transmission.

**Fig. 18** shows an example of an embodiment of a sonde transmitter 1 according to the invention, clamped to a guidance equipment 20, in particular similar to one or more of the aspects discussed in above presented embodiments. The sonde transmitter 1 comprises a three dimensional array of transmission antennas 33a, 33b, 33c. By a specific driving of those transmission antennas 33a, 33b, 33c the emission direction can be influenced as discussed before with the three antennas 33a, 33b, 33c. For example, a winding in the orientation of coil 33c will provide a field substantially as shown in Fig. 3. In another embodiment, each of the antennas 33a, 33b, 33c can be provided with an electrical signal having different characteristics (e.g. frequency or coding), so that the signals form each of the antennas is distinguishable from the other by the locator device 11 and an orientation of the sonde transmitter 1 can be concluded based on the received signals above ground.

A skilled person is aware of the fact that details, which are here shown and explained with respect to different embodiments, can also be combined with details from other embodiments and in other permutations in the sense of the invention.

**Claims**

1. Locator sonde transmitter (1) for transmitting an electromagnetic field (B) which is to be located by an electromagnetic locator device (11), with a sonde housing encapsulating at least

    o a battery (31), in particular an exchangeable or rechargeable battery (31),
    o electronics (30) to be powered by the battery (31) for generating an electrical signal with defined characteristics, in particular wherein the defined characteristics comprise at least one of modulation, frequency and/or strength,
    o a switching means (56) for turning the electronics (30) on or off, in particular in a circuit connecting the battery (31) and the electronics (30)
    o an antenna (33), in particular a magnetic coil antenna (33), to which the electrical signal is applied for emanating the magnetic field (B), **characterized by,**
an attachment interface built in such a way that the sonde transmitter (1) is mountable at a guidance equipment (20) to be inserted into a conduit or
piping (10), in particular at a push rod and/or an inspection camera system, wherein the attachment interface forms a passage for the guidance equipment (20) built for the guidance equipment (20) to extend on two sides of the sonde housing.

2. Locator sonde transmitter (1) according to claim 1, **characterized in that** the sonde housing and the attachment interface is embodied to at least partially encompass the guidance equipment (20), in particular by more than 180° when attached.

3. Locator sonde transmitter (1) according to claim 1 or 2, **characterized in that** the attachment interface is embodied as a releasable clamping mechanism and built as a quick lock fastener.

4. Locator sonde transmitter (1) according to claim 3, **characterized in that** the clamping mechanism is a toolless quick lock fastener built to be manually operated by a human operator.

5. Locator sonde transmitter (1) according to any one of claim 1 to 4, **characterized in that** the sonde housing and its attachment interface is built to be substantially concentric to the guidance equipment (20) when attached.

6. Locator sonde transmitter (1) according to any one of claim 1 to 5, **characterized in that** the sonde housing is embodied by at least two parts (1a,1b) to be fixed to each other and the attachment interface is built to clamp the guidance equipment (20) in-between the two parts (1a,1b), in particular wherein the clamping is done by forcing the two parts (1a,1b) together, in particular by a screw, leverage, wedge bolt, hook, tooth system, magnetic switch, pipe bracket, split tubular clip or clamp sleeve, preferably wherein the attachment interface is spring loaded.

7. Locator sonde transmitter (1) according to any one of claim 1 to 6, **characterized in that** the antenna (33) is shaped and aligned in such a way that the emitted electromagnetic field (B) has a defined emission pattern, which is substantial unidirectional around the guidance equipment (20) and is directional with a peak intensity substantially orthogonal to the direction of the guidance equipment (20).

8. Locator sonde transmitter (1) according to any one of claim 1 to 7, **characterized in that** the antenna is built and arranged in such a way that at least part of the emitted field magnetically couples to the guidance equipment, so that an attached guidance equipment emits/carries the magnetic field.

9. Locator sonde transmitter (1) according to any one of claim 1 to 8, **characterized in that** the switching means (56) comprises a magnetically actuated switch, in particular a reed switch encapsulated in the housing.

10. Locator sonde transmitter (1) according to any one of claim 1 to 9, **characterized in that** the switching means (56) is operated by the attachment interface, in such a way that it turns on the electronics (30) when the sonde transmitter (1) is attached and turns off the electronics (30) when the sonde transmitter (1) is detached from guidance equipment (20) by the attachment interface.

11. Locator sonde transmitter (1) according to any one of claim 1 to 10, **characterized in that** the switching means (56) is built to switch the sonde transmitter (1) into at least two different emitting modes, in particular emitting different frequencies.

12. Locator sonde transmitter (1) according to any one of claim 1 to 11, **characterized in that** the sonde transmitter (1) comprises a tilt sensor according to which's tilt value

    o an adaptation the defined characteristics of the electrical signal is established and/or
    o a selection of a distribution of the electrical signal to multiple of the antennas (33a,33b,33c) is established in such a way, that a dominant emission direction of the electromagnetic field (B) of the sonde transmitter (1) is always substantially plumb upward.

13. Locator sonde transmitter (1) according to any one of claim 1 to 12, **characterized in that** the attachment interface is embodied to encompass the guidance equipment (20), wherein the switching means (56) is operated by the attaching/detaching the attachment interface to/from the guidance equipment (20).

14. A method of attaching an electromagnetic sonde transmitter (1) to be detected by a mobile locator device (11), to a guidance equipment (20), in particular a sonde transmitter (1) according to any one of claim 1 to 13 which is built to be is inserted to a hollow occluded underground services (10) at a construction site, by clamping a housing of the sonde transmitter (1) to the guidance equipment by means of a attachment interface at the sonde housing, which attachment interface is built for the guidance equipment (20) to extend on two ends of the sonde housing, in particular wherein the sonde housing at least partially encircles the guidance equipment (20).

15. Method according to preceding claim 14, **characterized in that** the clamping is actuating a switching element (56) for turning an emanating of an electromagnetic field (B) of the sonde transmitter (1) on or off, in particular wherein the actuating of the switching element (56) is done by a magnetic field (55).

11

13t

13b

B

1

12

20

10

*Fig. 1*

20

1

20

*Fig. 2*

20
1
1a
1b
20
B

Fig. 3

63
20
56
31
30
32
33
34
1
20

Fig. 4

Fig. 5

20

50

51

1

20

*Fig. 6*

20

52

1

20

*Fig. 7*

20

54

53

55

56

N

S

1

20

*Fig. 8*

Fig. 9a

Fig. 9b

Fig. 10

Fig. 11

Fig. 12

Fig. 13

Fig. 14

Fig. 15

Fig. 16

20

1

33a

33b

31

*Fig. 17*

20

1

33a

33b

33c

*Fig. 18*

**Europäisches Patentamt**
**European Patent Office**
**Office européen des brevets**

# EUROPEAN SEARCH REPORT

Application Number

EP 14 19 8426

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/320133 A1 (OLSSON MARK S [US] ET AL) 30 October 2014 (2014-10-30) | 1,2,5,6, 14 | INV. G01V3/165 |
| Y | * abstract; figures 1,3,16-19 * <br> * paragraphs [0006], [0011], [0046], [0048], [0053], [0056], [0062], [0071], [0085] - [0090] * | 3,4 | |
| | ----- | | |
| X | US 2005/237061 A1 (CLOUTIER PAUL A [US] ET AL) 27 October 2005 (2005-10-27) <br> * abstract; figures 9,10 * <br> * paragraphs [0058] - [0060] * | 1,2,14 | |
| | ----- | | |
| Y | US 2014/192180 A1 (SOOY JOSH [US] ET AL) 10 July 2014 (2014-07-10) <br> * abstract; figures 4,6,7 * <br> * paragraphs [0052] - [0055] * | 3 | |
| | ----- | | |
| Y | US 2010/224409 A1 (SARHAD SHARDUL [US] ET AL) 9 September 2010 (2010-09-09) <br> * abstract; figures 4,6 * <br> * paragraphs [0030], [0035], [0036], [0038] - [0040] * | 4 | |
| | ----- | | |

TECHNICAL FIELDS SEARCHED (IPC)

G01V
G03B
G01M
G01N
E21B

~~The present search report has been drawn up for all claims~~

| Place of search | Date of completion of the search | Examiner |
|---|---|---|
| The Hague | 8 June 2015 | de Jong, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 14 19 8426

**CLAIMS INCURRING FEES**

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

**LACK OF UNITY OF INVENTION**

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-6, 14

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 14 19 8426

The Search Division considers that the present European patent application does not comply with the requirements of unity of invention and relates to several inventions or groups of inventions, namely:

```
    1. claims: 1-6, 14

        Locator sonde transmitter with attachment interface, wherein
        the attachment interface comprises a releasable clamping
        mechanism
                            ---

    2. claims: 7, 8, 11, 12

        Locator sonde transmitter with attachment interface, wherein
        the emitted EM field has a defined emission pattern
                            ---

    3. claims: 9, 10, 13, 15

        Locator sonde transmitter with attachment interface, wherein
        the attachment interface causes the electronics to turn on
        when the sonde transmitter is attached
                            ---
```

**ANNEX TO THE EUROPEAN SEARCH REPORT
ON EUROPEAN PATENT APPLICATION NO.**                    EP 14 19 8426

This annex lists the patent family members relating to the patent documents cited in  the above-mentioned European search report.
The members are as contained in the European Patent Office EDP file on
The European Patent Office is in no way liable for these particulars which are merely given for the purpose of information.

08-06-2015

| Patent document cited in search report | | Publication date | Patent family member(s) | | Publication date |
|---|---|---|---|---|---|
| US 2014320133 | A1 | 30-10-2014 | NONE | | |
| US 2005237061 | A1 | 27-10-2005 | AU | 2003270867 A1 | 19-04-2004 |
| | | | EP | 1543353 A2 | 22-06-2005 |
| | | | US | 2005237061 A1 | 27-10-2005 |
| | | | WO | 2004029562 A2 | 08-04-2004 |
| US 2014192180 | A1 | 10-07-2014 | CN | 103827747 A | 28-05-2014 |
| | | | DE | 112012003059 T5 | 24-04-2014 |
| | | | US | 2014192180 A1 | 10-07-2014 |
| | | | WO | 2013012981 A1 | 24-01-2013 |
| US 2010224409 | A1 | 09-09-2010 | EP | 2404026 A2 | 11-01-2012 |
| | | | US | 2010224409 A1 | 09-09-2010 |
| | | | WO | 2010102077 A2 | 10-09-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5194812 A
- EP 2362241 A
- US 8248056 B
- US 2005156600 A
- DD 97706
- DE 3220801
- DE 102004015873
- EP 0114259 A
- DE 964194